(19) Europäisches Patentamt
European Patent Office
Office européen des brevets

(11) Publication number: 0 264 623 B1

# (12) EUROPEAN PATENT SPECIFICATION

(45) Date of publication of patent specification: 06.11.91

(51) Int. Cl.5: C08F 283/08, C08L 51/08, C08G 65/48

(21) Application number: 87113546.3

(22) Date of filing: 16.09.87

## (54) Curable linear polyphenylene ether interpenetrating polymer network compositions and process.

(30) Priority: 22.09.86 US 909871

(43) Date of publication of application:
27.04.88 Bulletin 88/17

(45) Publication of the grant of the patent:
06.11.91 Bulletin 91/45

(84) Designated Contracting States:
DE FR GB IT NL

(56) References cited:
GB-A- 1 291 609
US-A- 4 148 843
US-A- 4 189 417

(73) Proprietor: GENERAL ELECTRIC COMPANY
1 River Road
Schenectady New York 12305(US)

(72) Inventor: Peters, Edward Norman
51 West Street
Lenox, MA 01240(US)
Inventor: Bookbinder, Dana Craig
75 Pomeroy Avenue
Pittsfield, MA 01201(US)
Inventor: Fox, Daniel Wayne
193 Dawes Avenue
Pittsfield, MA 01201(US)
Inventor: Smith, Gary Francis
140 Churchill Street
Pittsfield, MA 01201(US)

(74) Representative: Catherine, Alain et al
General Electric France Service de Propriété
Industrielle 18 Rue Horace Vernet
F-92136 Issy-Les-Moulineaux Cedex(FR)

EP 0 264 623 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This application is related to EP-A-87113543.0.

The present invention relates to curable polymer compositions and to methods to make shaped articles using them. More particularly it relates to interpolymerizable compositions of a polyphenylene ether resin, free of groups which inhibit free radicals, at least one liquid vinyl unsaturated monomer in combination with at least one monovinyl unsaturated compound copolymerizable with and different from previous liquid vinyl unsaturated monomer and an optional catalyst as well as optional reinforcing agents, flame retardant agents and/or impact modifying agents. Articles are produced by shaping the novel compositions below normal decomposition temperatures and allowing the vinyl component of the composition to cure into a polymer network.

In U.S.-A- 3,356,761, are disclosed compositions comprising hydroxy-terminated polyphenylene ethers, liquid vinyl monomers, such as styrene and vinyl pyridine, alone, or in further combination with free radical-generating catalysts, such as peroxides. It is taught that a primary advantage is to form products containing polyphenylene ethers at low temperatures, e.g., well below 300 °C., to avoid thermal degradation of the polyphenylene ethers at such high temperatures, as might otherwise be required. Although this patent teaches the production of linear polyphenylene ether containing interpenetrating polymer networks by curing the liquid styrene monomer, it does not suggest that additives which are normally thermally degradable at 300 °C. can be included in such composition. Moreover the compositions of this patent cure rather slowly and this is a major drawback.

In U.S.-A- U.S 3,637,578, compositions are disclosed comprising hydroxy-terminated polyphenylene ethers, liquid vinyl monomers, and a reactive-type polyester resin in combination with a free radical catalyst. In general, interpolymers are produced by curing, but, again, recommended curing times are very slow, e.g., 20 minutes at 150 °C., or the use of a highly reactive liquid vinyl monomer, such as diallyl phthalate is required to cure in 5 minutes at a higher temperature, 160 °C., and these are major drawbacks.

From U.S.-A- 3,375,228, it is known to modify polyphenylene ethers to improve their stability to oxidation, by reacting them with a so-called end-capping agent, which functionalizes the terminal hydroxyl groups of the polymers, rendering them less subject to interaction with oxygen. Suitable end-capping agents are, for example, acid halides, anhydrides and ketenes. There is no suggestion in this patent, however, that such end-capped polyphenylene ether resins can be used to make rapidly curing interpenetrating polymer networks with monomers, such as styrene.

In U.S.-A- 4,287,321, there is disclosed the production of interpolymers by subjecting solutions of polyphenylene ethers in liquid styrene to polymerization. Among the techniques disclosed is the reaction of the terminal hydroxyl groups of the polyphenylene ethers with an unsaturated anhydride, such as maleic anhydride. This is done to provide a reactive site for grafting styrene monomer off the end of the modified polyphenylene ether. There is no suggestion in this patent that such a modification will give an increased rate of cure when making interpolymers.

US-A-4148843 is directed toward a process for the preparation of a composition which comprises :

(a) a capped polyphenylene oxide resin ; and

(b) an alkenyl aromatic resin.

The process comprises a first step of forming a mixture of a capped polyphenylene oxide in an alkenyl aromatic monomer and a second step of heating this mixture for at least 2 hours to form the final composition.The alkenyl aromatic polymer in the final composition is said to have a higher molecular weight as compared with a composition prepared under similar conditions with an uncapped polyphenylene oxide.

In the present state of the art, therefore, it is known to use polyphenylene ether with a plasticizing monomer, such as styrene, to achieve low processing temperatures. However, slow curing is a major drawback and, if curing rates can be accelerated, then such compositions should become widely useful. For example, numerous additives could then be employed which cannot take normal polyphenylene ether processing temperatures. Among these can be mentioned the excellent, low cost flame retardant, aluminum trihydrate, and inexpensive forms of polyester fibers which can not now be used. In addition block copolymers of styrene-butadiene-styrene and acrylate core-styrene shell polymers which are very efficient impact modifiers can be used.

It has now been discovered that a polyphenylene ether resin substantially free of groups which interfere with free radicals is necessary to provide rapid curing when interpolymerized with a liquid, plasticizing monomer. It is believed that the hydroxyl terminal groups and any ether groups normally present and easily convertible to hydroxyl groups, i.e., incipient hydroxyl groups, must be removed or converted to inert functional groups prior to forming the interpenetrating polymer networks. Although numerous methods suggest themselves to so modify the polyphenylene ethers prior to use, especially convenient methods, as

will be described, involve reacting them with capping agents, for example, an anhydride or an acid halide, prior to use. The compositions thereafter produced by blending the modified polyphenylene ethers with the liquid plasticizing monomers have been found to be uniquely suitable, in light of their vastly increased cure rates, for shaping and curing into articles having a wide variety of end uses.

According to the present invention there are provided curable compositions comprising

(i) a thermoplastic polyphenylene ether resin substantially free of substituents which are inhibitors of free radicals;

(ii)(a) at least one liquid, mono vinyl unsaturated compound having a general formula selected from

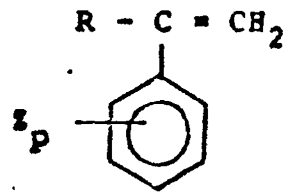

,

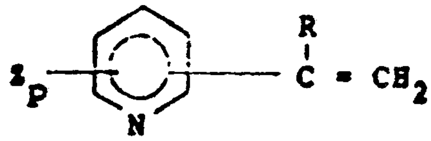

or a mixture of said compounds, wherein R is hydrogen or methyl, Z is hydrogen, halogen, alkyl or alkoxy and p is 0 or a whole number of from 1 to 3, in combination with,

(ii)(b) at least one monovinyl unsaturated compound copolymerizable with and different from component (ii)(a), said vinyl unsaturated compounds (ii)(a) and (ii)(b) comprising from 1 to 60 percent by weight of (i) and (ii)(a) and (ii)(b) combined; and, optionally,

(iii) an effective amount of a catalyst capable of generating free radicals to initiate polymerization of the vinyl unsaturated compounds (ii)(a) and (ii)(b); and at least one of:

(iv)(a) an effective amount of a reinforcing agent;

(iv)(b) an effective amount of a flame retardant agent;

(iv)(c) an effective amount of an impact modifier.

Also contemplated by this invention are shaped articles of manufacture formed by melt processing a composition as defined above by

(1) blending powder or pellets of component (i), with liquid component (ii)(a), liquid component (ii)(b); optionally, component (iii), and at least one of components (iv)(a); (iv)(b) or (iv)(c).

(2) extruding the composition to a desired shape at a temperature below 150° C.; and

(3) curing component (ii)(a) and component (ii)(b).

Among the preferred features of the invention are curable compositions comprising

(i) the reaction product of (A) a polyphenylene ether polymer; and (B) a compound having the general formula (I) — Z —(II) which is a compound that contains in its molecule both group (I) which is at least one group having the formula

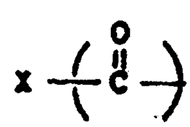

where X is F, Cl, Br, I, OH, OR, or

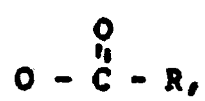

where R is H or an alkyl or aryl radical and group (II) which is at least one carboxylic acid, acid anydride, acid amide, imido, carboxylic acid ester, amino or hydroxyl group; wherein groups (I) and (II) are covalently bonded through linkage Z which is a divalent hydrocarbon radical;

(ii)(a) at least one liquid, mono vinyl unsaturated compound having a general formula selected from

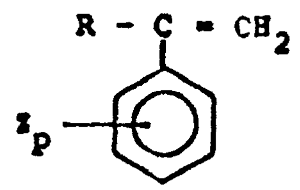,

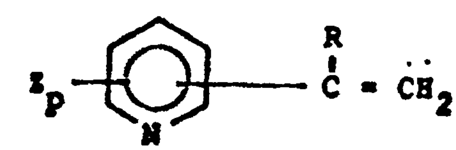

or a mixture of said compounds, wherein R is hydrogen or methyl, Z is hydrogen, halogen, alkyl or alkoxy and p is 0 or a whole number of from 1 to 3, in combination with,

(ii)(b) at least one monovinyl unsaturated compound copolymerizable with and different from component (ii)(a), said vinyl unsaturated compounds (ii)(a) and (ii)(b) comprising from 1 to 60 percent by weight of (i) and (ii)(a) and (ii)(b) combined; and, optionally,

(iii) an effective amount of a catalyst capable of generating free radicals to initiate polymerization of the vinyl unsaturated compounds (ii)(a) and (ii)(b).

Also contemplated are shaped articles of manufacture formed by melt processing the immediately preceding composition by

(1) blending powder or pellets of components (i), with liquid component (ii)(a), component (ii)(b) and, optionally, component (iii);

(2) extruding the composition to a desired shape at a temperature below 150 °C.; and

(3) curing component (ii)(a) and optional component (ii)(b).

Preferably the compounds (ii)(a) and (ii)(b) comprise from 15 to 40 percent by weight of (i) and (ii)(a) and (ii)(b) combined.

Before modification, the polyphenylene ethers (also known as polyphenylene oxides) used in the present invention are a well known class of polymers which have become very useful commercially as a result of the discovery by Allan S. Hay of an efficient and economical method of production (See, for example, U.S.-A- 3,306,874 and 3,306,875). After modification, they are still characterized as a class by the presence of arylenoxy structural units.

The polyphenylene ethers favored for modification and use in the practice of this invention generally contain structural units of the following formula

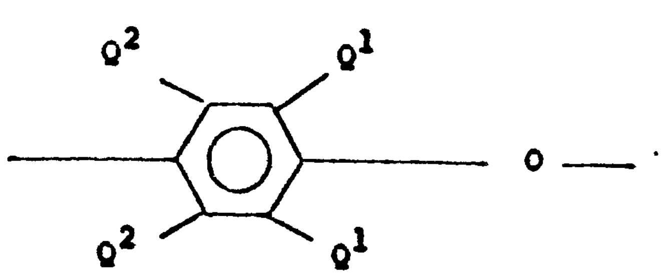 (I)

in which each of these units independently each $Q^1$ is hydrogen, halogen, primary or secondary lower alkyl (i.e., alkyl containing up to 7 carbon atoms), phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or

halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen.

Both homopolymers and copolymers are included. Suitable homopolymers are those containing, for example, 2,6-dimethyl-1,4-phenylene ether units. Suitable copolymers include random copolymers containing such units in combination with, for example, 2,3,6-trimethyl-1,4-phenylene ether units. Many suitable random copolymers, as well as homopolymers, are disclosed in the patent literature, including various Hay patents.

The polyphenylene ether generally has a molecular weight (number average, as determined by gel permeation chromatography, whenever used herein) within the range of 5,000 to 40,000. The intrinsic viscosity of the polymer is usually in the range of 0.4 to 0.6 deciliters per gram (dl./g.), as measured in solution in chloroform at 25° C.

The polyphenylene ethers may be prepared by known methods, and typically by the oxidative coupling of at least one corresponding monohydroxyaromatic (e.g., phenolic) compound. A particularly useful and readily available monohydroxyaromatic compound is 2,6-xylenol (in which for the above formula each $Q_1$ is methyl and each $Q^2$ is hydrogen), the corresponding polymer of which may be characterized as a poly(2,6-dimethyl-1,4-phenylene ether).

Any of the various catalyst systems known in the art to be useful for the preparation of polyphenylene ethers can be used in preparing those employed in this invention. For the most part, they contain at least one heavy metal compound, such as a copper, manganese or cobalt compound, usually in combination with various other materials.

Among the preferred catalyst systems are those containing copper. Such catalysts are disclosed, for example, in the aforementioned U.S-A- 3,306,874 and 3,306,875, and elsewhere. They are usually combinations of cuprous or cupric ions, halide ions (i.e., chloride, bromide or iodide), and at least one amine.

Also preferred are catalyst systems containing manganese. They are generally alkaline systems containing divalent managanese and such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, alpha-hydroxyoximes (both monomeric and polymeric), o-hydroxyaryl oximes, and beta-diketones. Also useful are cobalt-containing catalyst systems. Those skilled in the art will be familiar with patents disclosing manganese and cobalt-containing catalyst systems for polyphenylene ether preparation.

Especially useful polyphenylene ethers for modification according to this invention are those which comprise molecules having at least one of the end groups of formulas II and III, below, in which $Q^1$ and $Q^2$ are as previously defined, each $R^1$ is independently hydrogen or alkyl, providing that the total number of carbon atoms in both $R^1$ radicals is 6 or less, and each $R^2$ is independently hydrogen or a $C_{1-6}$ primary alkyl radical. Preferably, each $R^1$ is hydrogen and each $R^2$ is alkyl, especially methyl or n-butyl.

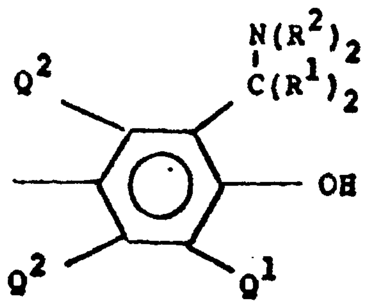

(II)

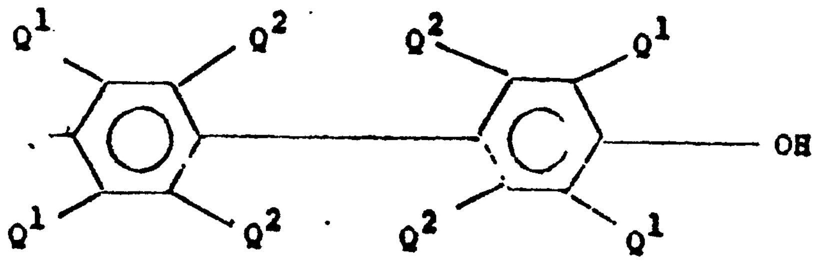

(III)

Polymers containing the aminoalkyl-substituted end groups of formula II may be obtained by incorporating an appropriate primary or secondary monoamine as one of the constitutents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the alpha-hydrogen atoms on one or more $Q^1$ radicals adjacent to the hydroxy group on the terminal unit of the polymer chain. During further processing and/or blending, the aminoalkyl-substituted end groups may undergo various reactions, probably involving a quinone methide-type intermediate of formula IV, below ($R^1$ is defined as above), with beneficial effects often including an increase in impact strength and compatibilization with other blend components.

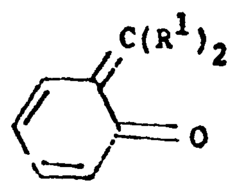

(IV)

Polymers with biphenol end groups of formula III are typically obtained from reaction mixtures in which a by-product diphenoquinone of formula V, below, is present, especially in a copper-halide-secondary or tertiary amine system. In this regard, the disclosures of the U.S.-A-4,234,706, 4,477,649 and 4,482,697 are particularly pertinent. In mixtures of this type, the diphenoquinone is ultimately incorporated into the polymer in substantial amounts, chiefly as an end group.

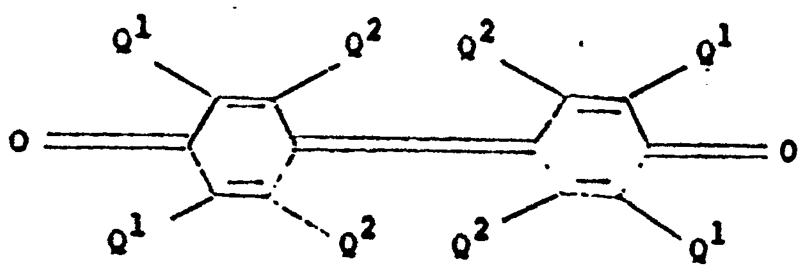

(V)

In many polyphenylene ethers obtained under the conditions described above, a substantial proportion of the polymer molecules, usually as much as about 90% by weight of the polymer, contain end groups having one or frequently both of formulas II and III. It should be understood, however, that other end groups

may be present and that the invention in its broadest sense may not be dependent on the molecular structures of the polyphenylene ether end groups.

To modify the foregoing polyphenylene ethers, they are preferably provided with terminal groups selected from the reaction products thereof with an organic acid, an organic acid halide, an organic acid anhydride, a ketene, or a compound having one or more of such functional groups or a mixture of any of foregoing.

Many ways are known to those skilled in this art for forming such modified polyphenylene ethers. For example,US-A-3375228. describes heat treatment of the polymer to generate incipient, reactive hydroxyl groups on the polymer chain followed by reaction of generated hydroxyl groups with a material capable of reacting therewith to form the inert substituents. According to the patent, the polyphenylene ethers can be modified using either a one-step or a two-step capping procedure. In the one step process, a solution is prepared by dissolving both the polymer and a capping agent in a mutual solvent such as toluene, benzene, or any other liquid non-reactive with the polymer and capping agent. The solution is heated to an elevated temperature, preferably to temperatures in excess of (250° F) 121° C and most preferably, to temperatures varying between (400) 204 and (650° F) 343° C. Heating may be performed in an autoclave using pressures exceeding atmospheric. The temperature is held for a period of time sufficient to allow any incipient hydroxyl groups to be generated. This is, of course, dependent upon the temperature used and the reactivity of the materials. In general times varying between 30 seconds and 2 hours have been found suitable. Hydroxyl groups are generated at the elevated temperature and simultaneously react with capping agent to form substituents substantially inert to free radicals. Upon completion of the capping reaction, the solution is cooled and the polymer recovered by precipitation with a polymer non-solvent such as methanol.

Alternatively, the one-step capping reaction can be carried out dry by blending polymer in powder form with a capping agent and extruding the blend at the elevated temperatures.

The two-step capping procedure is similar to the one-step process and involves a first step of preheating the polymer, either in powder or solution form to generate hydroxyl groups in accordance with the procedure outlined above. The polymer may then be cooled and reacted with the capping agent, at ambient or elevated temperatures to stabilize the polymer. At lower temperatures, it is desirable to use a catalyst such as boron trifluoride etherate, sodium acetate or a tertiary amine.

The specific capping agents used are not critical providing they are reactive with hydroxyl groups to form a substituent inert to free radicals. Typical examples of capping agents include acid halides, anhydrides, ketenes, etc. Typical examples of acid halides include, but are not limited to, acetyl chloride, acetyl bromide, benzoyl chloride, cinnamoyl chloride, succinoyl chloride, succinoyl fluoride, adipoyl chloride, stearoyl fluoride, lauroyl chloride, malonoyl chloride, terephthaloyl chloride, isophthaloyl chloride, etc. Typical examples of anhydrides, include for example, maleic anhydride, butyric anhydride, trichloroacetic anhydride, propionic anhydride, pivalic anhydride, phthalic anhydride, succinic anhydride, m-dichlorobenzoic anhydride, 2,3,4,5,6-pentachlorobenzoic anhydride, pentaoic anhydride, palmatoic anhydride, stearic anhydride, etc. Typical ketenes include, for example, diphenyl ketene, unsubstituted ketene, butyl ethylketene, dimethyl ketene, etc.

Special mention is made of an especially preferred family of capping agents. These are of the formula: (I)—Z—(II), wherein I and (II) are as defined above.

Illustratively, the group (I) portion of the capping agent has been generalized as an acyl-functional group depicted by the following formula:

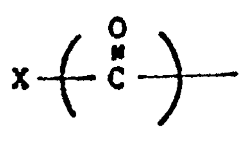

where X is F, Cl, Br, I, OH, OR or

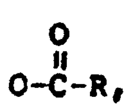

etc. and where R is H or an aliphatic or aromatic radical having up to about 10 carbon atoms. Group (I) is covalently bonded to a Group II, e.g., an anhydride group.

Examples of suitable materials of general formula (I)—Z—(II) include but are not limited to the following:

Chloroethanoylsuccinic anhydride

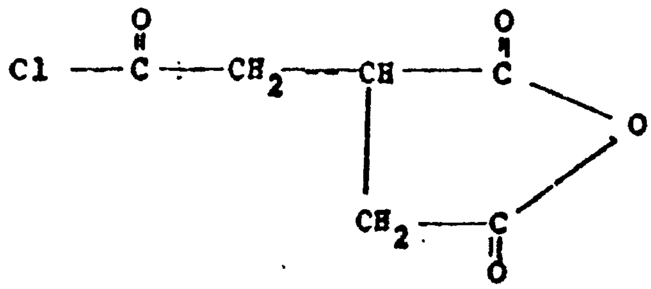

trimellitic anhydride acid chloride (TAAC)

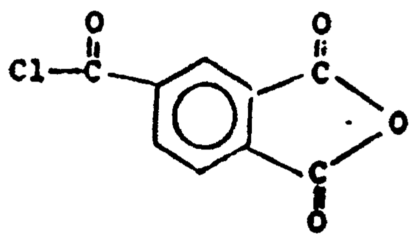

chloroformylsuccinic anhydride

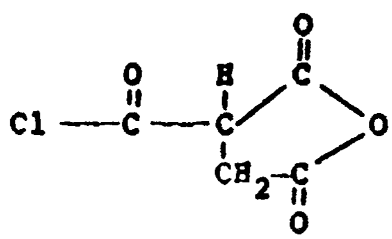

1-acetoxyacetyl-3,4-dibenzoic acid anhydride

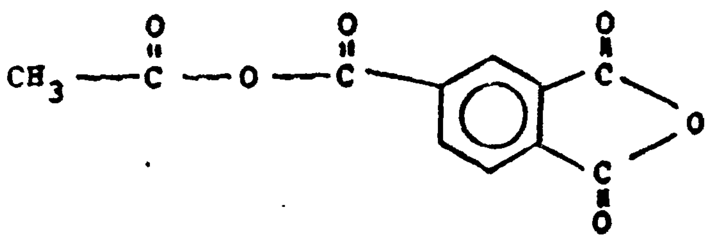

Special mention is made of the most preferred such compound, trimellitic anhydride acid chloride. Its use as a capping agent and the use of the polyphenylene ethers reacted therewith in the compositions of this invention are exemplified hereinafter.

With respect to component (ii)(a), the liquid monovinyl unsaturated compound is meant to include a compound or a mixture of compounds liquid at room temperature or at elevated temperatures of up to 100°C. and selected from:

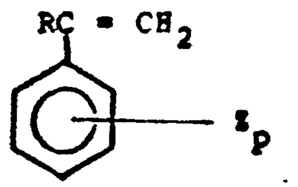

or

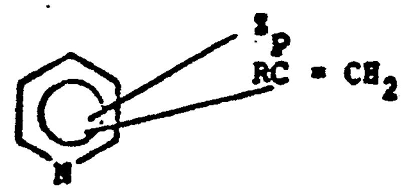

or a mixture of the foregoing, where R is hydrogen or methyl; Z is hydrogen, halogen (e.g., chlorine, bromine, iodine and fluorine), alkyl (e.g., methyl, ethyl, propyl, isopropyl, butyl, octyl, etc.) or alkoxy (e.g., methoxy, ethoxy, propoxy, isopropoxy, butoxy, etc); and p is 0 or a whole number equal to from 1 to 3.

The preferred vinyl unsaturated material is styrene.

With respect to component (ii)(b), this will comprise at least one monovinyl unsaturated compound compolymerizable with and different from (ii)(a). Illustratively, the compounds can be unsaturated esters, e.g., dialkyl fumarates, e.g., diethyl fumarate and dioctyl fumarate, dialkyl itaconates, dialkyl maleates, N-substituted maleimides, e.g., N-phenyl maleimide, acrylates, such as butyl acrylate, vinyl ethers, vinyl esters, such as vinyl acetate, and the like. Preferably, the component (ii)(b) will be diethyl fumarate or N-phenyl maleimide.

In those embodiments of the invention which are reinforced, any conventional reinforcing agent can be used, in conventional amounts, so long as it does not inhibit the interpolymerization reaction. Illustratively, these will comprise reinforcing glass fibers, carbon fibers, polyester fibers, titanium whiskers, generally in amounts of from 5 parts to 50 parts by weight, per 100 parts by weight of the total composition. Preferably in component (iv)(a) the reinforcing fibers comprise glass fibers, polyester fibers or a mixture thereof.

In those embodiments of the invention which are flame retarded, component (iv)(b) can vary widely in type and amount. For example a halogenated aromatic compound or low polymer can be used, e.g., decabromodiphenyl ether, or brominated polycarbonate oligomer can be used, as well as phosphate esters, and the like, in amounts of from 1 to 40 parts by weight per 100 parts by weight of the total composition. Special mention is made non-halogen, non-phosphorus, polyphenylene ether-containing compositions of this invention rendered flame retardant with aluminum trihydrate, when contacted with flame, these give only water as an off gas, and the flame retardant does not contribute to smoke formation.

In those embodiments of the invention which are impact modified, component (iv)(c) the (c)can vary widely in type and amount, although some are better than others. For example, rubber, synthetic or natural, can be included. However, it is preferred to use polymeric impact modifiers well known to those skilled in this art such as block copolymers and core shell polymers. Preferred block copolymers are styrene-ethylene-butylene-styrene compositions and preferred core shell polymers have a polymerized butyl acrylate core and a polystyrene shell.

The method of forming the blend of the vinyl material and other components and the modified polyphenylene ether is not critical, any of the methods well known in the prior art being suitable. For example, the components may be mixed in a blender such as a Waring Blender, a Haake mixing bowl, or in conventional rubber milling equipment. Alternatively, the vinyl material and other components an polymer may be dissolved in a common solvent and recovered therefrom by solvent evaporation or by precipitation with a non-solvent.

The quantity of vinyl material and other components combined with the polyphenylene ether may vary within broad limits, but should not be used in an amount that would cause complete dissolution of the polymer. Prefer ably, the mixture of vinyl material and polymer is in the form of free flowing powder or pellets. When an excessive amount of vinyl material is used, a paste or viscous liquid forms. In general, the quantity of vinyl material may vary between 1.0 and 60.0%, by weight, of the total composition, but it should be understood that this is dependent upon the specific materials used and the molecular weight of the polymer. From 15.0 to 40.0% by weight, of vinyl material in the total composition, constitutes a preferred

embodiment of this invention.

Following combination of the vinyl material with the polyphenylene ether, the composition may be formed into shaped articles by melt processing using conventional procedures. For example, film and fiber of substantial cross section can be formed by extrusion. The temperature of processing is dependent upon the quantity of vinyl material in the composition and the molecular weight of the polymer. For example, with a mixture consisting of styrene and a linear poly-(2,6-dimethyl-1,4-phenylene) ether having an intrinsic viscosity of about 0.50 dl./g., the extrusion temperature through the orifice is about 80° C. The same polymer free of styrene has an extrusion temperature in excess of 275° C.

If the composition used to form the shaped article is in the form of free flowing powder or pellets, the so formed shaped article will maintain its structural integrity and can be handled and processed without damage. Curing or polymerization of the vinyl starting material may be initiated by almost any source of free radicals including organic peroxide materials and organic azo compounds, such as benzoyl peroxide, dicumyl peroxide, azobisisobutyronitrile, etc., any of which can be included in the initial formulation. A wide variety of organic peroxides may be used including organic diperoxides. Special mention is made of t-butyl peroxybenzoate.

Other means of initiating and carrying out the polymerization include the use of ionizing radiation such as X-radiation, electron beam irradiation, promoted UV radiation, and similar application of ionizing energy.

A further alternative is to use heat alone without added catalyst. This approach requires extended cure time, but has the advantage of not requiring catalysts and provides for very extensive shelf life of the pre-mix.

Articles formed by the above procedures possess excellent physical properties as will be described in the following examples.

As an aid in practicing the present invention the following procedure can be used to provide a polyphenylene ether substantially free of inhibitors of free radicals by capping with trimellitic anhydride acid chloride.

PROCEDURE

Various polyphenylene ether-trimellitic anhydride acid chloride reaction products were prepared. In one method, a 30% by weight solution of poly(2,6 dimethyl-1,4-phenylene) ether in toluene (obtained directly from the polymerization of 2,6-xylenol in toluene after removal of copper catalyst) was utilized ("PRE CON" PPE). In another method, an "isolated PPE" obtained by methanol precipitation and dissolved in 500 parts toluene was used. In either case, one hundred parts of PPE was reacted with between 1.7 and 2.3 parts of trimellitic anhydride acid chloride (TAAC), and between 4.1 to 5.8 parts of dimethyl-n-butylamine (DMBA) was utilized as an acid acceptor. The reactions were carried out at 95° C. for between 0.5 to 3.0 hours.

The TAAC was obtained from Aldrich Chemical at a purity of 99%, molecular weight 210.57 g/mole, and melting point of 66 to 68° C.

The reaction products were purified by precipitation in methanol and thereafter dried overnight in a vacuum oven at 60 to 80° C.

The formation of PPE-TAAC was verified by infrared analysis which indicated a reduction of a known PPE hydroxyl peak at 2650 to 2900 nm and the appearance of a carbonyl absorption peak at 1730-1740 $cm^{-1}$.

The following examples illustrate the present invention.

COMPARATIVE EXAMPLES 1A-2A AND EXAMPLES 1-2

Compositions are prepared comprising PPE-TAAC, styrene, N-phenyl maleimide or diethyl fumarate and t-butyl peroxybenzoate and subjected to cure time testing by differential scanning colorimetry, and the time to achieve 100% cure is noted. For comparison purposes, compositions are also prepared, but using hydroxy-terminated PPE in accordance with the prior art. The compositions used and the results obtained are set forth in Table 1:

TABLE 1. Cure Rates for Linear Systems

| Example | 1 | 1A* | 2 | 2A* |
|---|---|---|---|---|
| **Composition (parts by weight)** | | | | |
| Poly(2,6-dimethyl-1,4-phenylene ether)-TAAC | 59.2 | -- | 59.2 | -- |
| Poly(2,6-dimethyl-1,4-phenylene ether) | -- | 59.2 | -- | 59.2 |
| Styrene | 33.1 | 33.1 | 30.4 | 30.4 |
| N-phenyl maleimide | 6.2 | 6.2 | -- | -- |
| Diethyl fumarate | -- | -- | 5.1 | 5.1 |
| Zinc stearate | 1.5 | 1.5 | 1.5 | 1.5 |
| t-Butyl peroxybenzoate | 0.75 | 0.75 | 0.75 | 0.75 |
| **Properties** | | | | |
| Cure time as determined by DSC, minutes | 2.5 | 10 | 5 | 10 |

The foregoing results demonstrate the vastly superior cure rates obtained following the use of capped polyphenylene ethers in comparison to the uncapped polyphenylene ethers when curing styrene and either N-phenyl maleimide or diethyl fumarate (1A* and 2A*).

EXAMPLES 3-8

Linear polyphenylene ether interpenetrating network polymers were prepared by melt mixing poly(2,6-dimethyl-1,4-phenyleneether) TAAC (Procedure), styrene monomer and diethyl fumarate in a Haake bowl (set temperature, 75° C.) for 2 minutes at 90 revolutions per minute (rpm). The compositions were subsequently compression molded at 150° C., for 5 minutes, to polymerize the unsaturated components, and the heat distortion temperature of the shaped article measured by ASTM Standard Method D 648. The formulations used and the results obtained are set forth in Table 2:

TABLE 2:

Polyphenylene Ether/Styrene Network Interpolymers

| Example | 3 | 4 | 5 | 6 | 7 | 8 |
|---|---|---|---|---|---|---|
| Composition (parts by weight) | | | | | | |
| Polyphenylene ether-TAAC modified | 85 | 70 | 85 | 70 | 85 | 70 |
| Styrene monomer | 13 | 26 | 11 | 22.5 | 7.5 | 15 |
| Diethyl fumarate monomer | 2 | 4 | 4 | 7.5 | 7.5 | 15 |
| t-Butylperoxybenzoate catalyst | 0.225 | 0.45 | 0.225 | 0.45 | 0.225 | 0.45 |
| Properties | | | | | | |
| Heat distortion temperature at 1.82 MPa (264 psi), °C. | 145 | 148 | 152 | 138 | 153 | 146 |

EXAMPLE 9

A glass-reinforced interpolymer according to this invention was prepared. In a Haake mixing bowl with set temperatures at 75° C. polyphenylene ether-TAAC, 54.5 parts was melted, mixed in the presence of 19 parts of styrene monomer, 8.1 parts diethyl fumarate and 0.41 wt-% of t-butyl peroxybenzoate. 18.2 parts of (1/4") 6.35 mm Owens Corning chopped fibrous reinforcement was added (Fiberglass 405AA). After mixing for 2 minutes at 90 rpm, the mixture was removed and subsequently compression molded at 150° C. for 5 minutes. The resulting shaped article had a heat distortion temperature at 1.82 MPa (264 psi) of 153° C., a flexural strength of 121.76 MPa (17,660 psi), and a flexural modulus of 4550.5 MPa (660,000 psi).

EXAMPLES 10-12

Impact modified interpolymers according to this invention were made in a Haake mixing bowl by melt mixing at 75° C. polyphenylene ether-TAAC, 60 parts, 21 parts of styrene, 9 parts of diethyl fumarate and 0.45 parts of t-butylperoxybenzoate as catalyst. The resulting material was formed into a shaped article by compression molding at 150° C. for 5 minutes to polymerize the styrene and the diethyl fumarate. The workpieces were subjected to impact strength testing according to the standard notched Izod Method of ASTM D 256. The composition used and the results obtained are set forth in Table 3:

TABLE 3:

Interpolymers of Polyphenylene Ether, Polystyrene and Diethyl Fumarate

| Example | 10 | 11 | 12 |
|---|---|---|---|
| Composition (parts by weight) | | | |
| Poly(2,6-dimethyl-1,4-phenylene ether) TAAC | 60 | 60 | 60 |
| Styrene | 21 | 21 | 21 |
| Diethyl Fumarate | 9 | 9 | 9 |
| t-Butylperoxy benzoate catalyst | 0.45 | 0.45 | 0.45 |
| Impact modifier | | | |
| Styrene-ethylene-butylene-styrene block copolymer[a] | -- | 14 | -- |
| Butylacrylate core/poly-styrene shell copolymer | -- | -- | 10 |
| Properties | | | |
| Notched Izod Impact Strength, J/cm (ft.lbs./in notch) | 0.106 (0.2) | 2.67 (5.0) | 4.27 (8.0) |

a Shell Kraton G® 1651

The foregoing results indicate that efficiently impact modified shaped articles can be obtained in accordance with this invention.

EXAMPLES 13-21

Compositions according to this invention were made by the general procedure of Examples 1-6, substituting N-phenyl maleimide for the diethyl fumarate. The mixing bowl was carried out at 80° C. in the Haake mixing and the compression molding and curing were conducted at 150° C., for 5 minutes. The compositions used and the results obtained are set forth in Table 4:

TABLE 4:

Interpolymers of Polyphenylene Ether, Styrene and N-Phenyl Maleimide

| Example | 13 | 14 | 15 | 16 | 17 | 18 | 19 | 20 | 21 |
|---|---|---|---|---|---|---|---|---|---|
| **Composition (parts by weight)** | | | | | | | | | |
| Poly(2,6-dimethyl-1,4-phenylene ether)TAAC | 78.8 | 69.0 | 59.2 | 49.2 | 39.4 | 59.2 | 59.2 | 59.2 | 59.2 |
| Styrene | 16.6 | 24.9 | 33.1 | 41.6 | 49.9 | 27.7 | 23.0 | 18.7 | 14.8 |
| N-Phenyl Maleimide | 3.1 | 4.6 | 6.2 | 7.6 | 9.2 | 11.6 | 16.3 | 20.6 | 24.5 |
| t-Butyl peroxy benzoate | ← | | | | 1.5 | | | | → |
| Zinc Stearate (lubricant) | ← | | | | 1.5 | | | | → |
| **Properties** | | | | | | | | | |
| Glass Transition, Tg, °C. | 177 | 164 | 161 | 150 | 142 | 168 | 176 | 185 | 194 |
| Heat Distortion Temp., at 1.82 MPa (264 psi), °C. | 154 | 152 | 149 | 141 | 130 | 151 | 158 | 166 | 182 |
| Flexural Modulus (Kpsi) | (386) | (409) | (375) | (355) | (338) | (394) | (415) | (455) | (437) |
| MPa | 2661.3 | 2819.9 | 2585.5 | 2447.6 | 2330.4 | 2716.5 | 2861.3 | 3137.1 | 3012.9 |
| Flexural Strength (Kpsi) | (13.4) | (15.8) | (14.6) | (10.6) | (9.6) | (11.1) | (8.4) | (11.2) | (6.9) |
| MPa | 92.39 | 108.93 | 100.66 | 73.08 | 66.19 | 76.53 | 57.91 | 77.22 | 47.57 |

Shaped articles in accordance with the present invention were obtained.

EXAMPLES 22-36

The general procedure of Examples 8-10 was repeated, substituting N-phenyl maleimide and using impact modifiers. Melt mixing was carried out at 80°C. for 3 minutes. Compression molding and curing were carried out at 150°C. for 3 minutes. A falling dart impact tester (Dynatup) using a 10.16 cm (4") sample and 1.27 cm (1/2") dart and speed at impact of 3.35 m/s (11 feet/sec.) was used to measure impact strength. The compositions used and the results obtained are set forth in Table 5:

TABLE 5: Interpolymers of Polyphenylene Ether, Styrene and N-Phenyl Maleimide

| Example | 22 | 23 | 24 | 25 | 26 | 27 | 28 | 29 | 30 | 31 | 32 | 33 | 34 | 35 | 36 |
|---|---|---|---|---|---|---|---|---|---|---|---|---|---|---|---|
| **Composition (parts by weight)** | | | | | | | | | | | | | | | |
| Poly(2,6-dimethyl-1,4-phenylene ether)-TAAC | 57.9 | 56.1 | 53.1 | 50.1 | 57.9 | 56.1 | 53.1 | 50.1 | 57.9 | 56.1 | 53.1 | 50.1 | 56.1 | 53.1 | 50.1 |
| Styrene | 22.5 | 21.8 | 20.7 | 19.6 | 22.5 | 21.8 | 20.7 | 19.6 | 22.5 | 21.8 | 20.7 | 19.6 | 21.8 | 20.7 | 19.6 |
| N-Phenyl Maleimide | 16.1 | 15.6 | 14.7 | 13.8 | 16.1 | 15.6 | 14.7 | 13.8 | 16.1 | 15.6 | 14.7 | 13.8 | 15.6 | 14.7 | 13.8 |
| t-Butyl peroxybenzoate | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Zinc Stearate (lubricant) | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Impact modifiers | | | | | | | | | | | | | | | |
| Styrene-ethylene-butylene-styrene[a] | 2 | 5 | 10 | 15 | — | — | — | — | — | — | — | — | — | — | — |
| Styrene-ethylene-butylene-styrene[b] | — | — | — | — | 2 | 5 | 10 | 15 | — | — | — | — | — | — | — |
| Styrene-ethylene-butylene-styrene[c] | — | — | — | — | — | — | — | — | 2 | 5 | 10 | 15 | — | — | — |
| Butyl acrylate core/styrene shell | — | — | — | — | — | — | — | — | — | — | — | — | 5 | 10 | 15 |
| **Properties** | | | | | | | | | | | | | | | |
| Notched Izod Impact Strength, (ft-lbs/in notch) | (0.5) | (1.6) | (3.1) | (3.5) | (0.8) | (0.8) | (1.3) | (2.8) | (0.5) | (0.8) | (1.1) | (3.2) | (0.5) | (0.8) | (1.6) |
| Dynatup Energy absorbed, (ft. lbs.) | (1.3) | (4.8) | (7.6) | (28.6) | (1.9) | (4.0) | (4.3) | (14.5) | (3.1) | (5.0) | (6.0) | (9.5) | (2.0) | (5.3) | (6.3) |
| Peak load, (Pounds) | (80) | (165) | (190) | (639) | (113) | (189) | (150) | (370) | (133) | (133) | (112) | (232) | (180) | (130) | (170) |

a, b, c Shell Chemical Co., Kraton G® 1651, Kraton G® 1657; Kraton D® 1101, respectively

In addition to the foregoing tests, articles molded from Examples 25, 29, 33 and 36 were also tested for physical strength with the following results:

| Example | 25 | 29 | 33 | 36 |
|---|---|---|---|---|
| **Properties** | | | | |
| Flexural modulus (Kpsi) | (270) | (304) | (280) | (200) |
| Flexural Strength (Kpsi) | (10.2) | (11.5) | (10.5) | (3) |

## EXAMPLES 37-44

Reinforced articles were prepared in accordance with this invention by following the general procedure of Examples 13-21, but also including glass fiber reinforcement and poly(ethylene terephthalate) fiber reinforcement. Mixing temperatures were 80° C. for 3 minutes. Molding was carried out at 150° C. for 3 minutes. The formulations used and the results obtained are set forth in Table 6:

**TABLE 6:**

**Reinforced Interpolymers of Polyphenylene Ethers, Styrene and N-Phenyl Maleimide**

| Example | 37 | 38 | 39 | 40 | 41 | 42 | 43 | 44 |
|---|---|---|---|---|---|---|---|---|
| **Composition (parts by weight)** | | | | | | | | |
| Poly(2,6-dimethyl-1,4-phenyl ether | 59.2 | 53.1 | 47.0 | 41.0 | 34.9 | 44.0 | 41.0 | 34.9 |
| Styrene | 23.0 | 20.6 | 18.4 | 16.0 | 17.7 | 17.2 | 16.0 | 13.7 |
| N-Phenyl Maleimide | 16.4 | 14.7 | 13.1 | 11.5 | 9.8 | 12.3 | 11.5 | 9.8 |
| Zinc Stearate | 1.5 → | | | | | | | |
| t-Butyl Peroxybenzoate | 1.5 → | | | | | | | |
| **Reinforcement** | | | | | | | | |
| Glass fibers[a], 1/4" | -- | 10 | 20 | 30 | 40 | 20 | 20 | 20 |
| Poly(ethylene terephthalate fibers[b]) | -- | -- | -- | -- | -- | 5 | 10 | 20 |
| **Properties** | | | | | | | | |
| Flexural modulus (Kpsi) | (400) | (580) | (640) | (750) | (890) | (610) | (640) | (690) |
| Flexural Strength (Kpsi) | (10.5) | (15.6) | (15.1) | (11.3) | (13.0) | (11.0) | (11.5) | (9.6) |
| Dynatup Energy absorbed, (ft./lbs.) | (3-5) | (5-7) | (5-7) | (6-8) | (6-8) | (5-7) | (5-7) | (6-8) |
| Peak load, (lbs.) | (150) | (200-250) | (200-250) | (200-250) | (200-250) | (200-300) | (200-300) | (200-300) |
| Heat Distortion Temp., (@264 psi), °C. | 159 | 166 | 168 | 168 | 171 | 164 | 163 | 160 |

a Owens-Corning Fiberglass Co., 405AA.
b Mini-Fibers Co., 6-6010.

EXAMPLES 45-50

Reinforced and impact modified articles were prepared in accordance with this invention by following the general procedure of Examples 13-21, but also including glass fibers, and two block copolymers. The formulations used and the results obtained are set forth in Table 7:

TABLE 7:

Reinforced Impact-Modified Interpolymers of Polyphenylene Ethers, Styrene and N-Phenyl Maleimide

| Example | 45 | 46 | 47 | 48 | 49 | 50 |
|---|---|---|---|---|---|---|
| **Composition (parts by weight)** | | | | | | |
| Poly(2,6-dimethyl-1,4-phenyl ether | 44.0 | 41.0 | 37.9 | 44.0 | 41.0 | 37.9 |
| Styrene | 17.2 | 16.0 | 14.9 | 17.2 | 16.0 | 14.9 |
| N-Phenyl Maleimide | 12.3 | 11.5 | 10.6 | 12.3 | 11.5 | 10.6 |
| Zinc Stearate | 1.5 → | | | | | |
| t-Butyl Peroxybenzoate | 1.5 → | | | | | |
| **Reinforcement** | | | | | | |
| Glass fibers[a], 1/4" | 20.0 → | | | | | |
| **Impact Modifiers** | | | | | | |
| Styrene-ethylene-butylene styrene[b] | 5.0 | 10.0 | 20.0 | -- | -- | -- |
| Styrene-ethylene-butylene styrene[c] | -- | -- | -- | 5.0 | 10.0 | 20.0 |
| **Properties** | | | | | | |
| Flexural modulus (Kpsi) MPa | (610) 4205.9 | (540) 3723.1 | (470) 3240.5 | (560) 3861 | (510) 3516.3 | (510) 3516.3 |
| Flexural Strength Kpsi MPa | (15.4) 106.18 | (14.7) 101.35 | (13.6) 93.77 | (13.7) 94.46 | (13.6) 93.77 | (15.4) 106.18 |
| Dynatup | | | | | | |
| Energy absorbed, (ft.-lbs.) J | (5-7) 6.78-9.49 | (5-8) 6.78-9.49 | (5-8) 6.78-10.8 | ND | ND | ND |
| Peak load, (lbs.) kg | (200-250) 90.72-113.4 | (200-250) 90.72-113.4 | (200-250) 90.72-113.4 | ND | ND | ND |
| Heat Distortion Temp., (264 psi) 1.82MPa, °C. | 166 | 163 | 159 | 166 | 163 | 158 |

a Owens Corning Fiberlass Co., 405AA.

b, c Shell Chemical, Kraton G® 1651; Kraton D® 1101

EXAMPLE 51

A flame retardant composition according to this invention was prepared by mixing 50 parts by weight of

poly(2,6-dimethyl-1,4-phenylene ether)TAAC, 20 parts of styrene, 5 parts of diethylfumarate, 0.375 parts t-butylperoxybenzoate and 25 parts of aluminum trihydrate. The composition was compounded in a Haake bowl at 80° C. for 3 minutes, and molded and cured at 150° C. for 6 minutes to give a shaped article having a heat distortion temperature at 1.82 MPa (264 psi) of (310° F) 154° C. When tested for flammability in the Underwriters Laboratories Vertical Burn Test, UL-94, the shaped article self-extinguished in less than ten seconds and did not drip flaming resin (rating V-0).

The above-mentioned patents and publications are incorporated herein by reference.

Many variations will suggest themselves to those skilled in this art in light of the above, detailed decription. For example, instead of using polyphenylene ether capped with TAAC, polyphenylene ether capped with acetic anhydride, maleic anhydride and benzoyl chloride can be used. Instead of styrene monomer, alpha-methyl styrene, vinyl toluene, and 4-vinyl pyridine can be used. Instead of t-butyl peroxybenzoate, azobisisobutyronitrile can be used. As a flame retardant, aluminum trihydrate and decabromodiphenyl ether can be used. Instead of glass fibers and polyester fibers, fibers comprising polypropylene, cellulosics (rayon, cotton, jute, etc.), nylon, acrylics, wool, and the like can be used. Other additives, such as chlorinated polymers, antioxidants, thermal and ultraviolet stabilizers, lubricants, organic dyes and pigments, anti-static agents and the like can be employed. In general, any additives conventional for use in commodity plastics, e.g., polyethylene, polypropylene, polystyrene and vinyls can now be used in an engineering system.

## Claims

1. A curable composition comprising:

(i) a thermoplastic polyphenylene ether resin substantially free of substituents which are inhibitors of free radicals;

(ii)(a) at least one liquid, monovinyl unsaturated compound having a general formula selected from

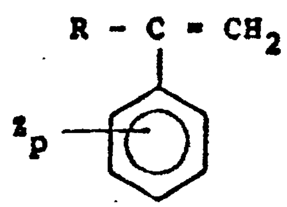

,

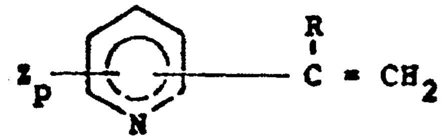

or a mixture of said compounds, wherein R is hydrogen or methyl, Z is hydrogen, halogen, alkyl or alkoxy and p is 0 or a whole number of from 1 to 3, in combination with,

(ii)(b) at least one monovinyl unsaturated compound copolymerizable with and different from component (ii)(a), said vinyl unsaturated compound (ii)(a) and (ii)(b) comprising from 1 to 60 percent by weight of (i) and (ii)(a) and (ii)(b) combined; and, optionally,

(iii) an effective amount of a catalyst capable of generating free radicals to initiate polymerization of the vinyl unsaturated compounds (ii)(a) and (ii)(b); and at least one of:

(iv)(a) an effective amount of a reinforcing agent;

(iv)(b) an effective amount of a flame retardant agent; or

(iv)(c) an effective amount of an impact modifier.

2. A composition as defined in Claim 1 wherein the compounds (ii)(a) and (ii)(b) comprise from 15 to 40 percent by weight of (i) and (ii)(a) and (ii)(b) combined.

3. A composition as defined in Claim 1 wherein said polyphenylene ether is a homopolymer or copolymer containing structural units of the formula:

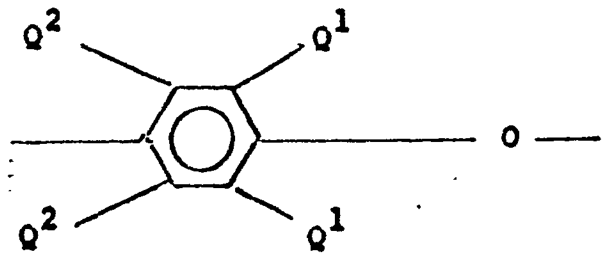

in which for each of these units independently each $Q^1$ is hydrogen, halogen, primary or secondary lower alkyl having up to seven carbon atoms, phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$, said polyphenylene ether having terminal groups selected from reaction products of said polyphenylene ether with an organic acid, an organic acid halide, an organic acid anhydride, a ketene, or a compound having more than one of the functional groups or a mixture of any of the foregoing.

4. A composition as defined in Claim 3 wherein said polyphenylene ether is a poly(2,6-dimethyl-1,4-phenylene ether) or a poly(2,6-dimethyl-co-2,3,6-trimethyl-1,4-phenylene ether) end capped with an acid halide, and acid anhydride or compound having both acid halide and acid anhydride functional groups.

5. A composition as defined in Claim 4 wherein said polyphenylene ether is end capped with trimellitic anhydride acid chloride.

6. A composition as defined in Claim 1 wherein component (ii)(a) comprises a vinyl aromatic hydrocarbon and component (ii)(b) comprises a dialkyl fumarate or an N-substituted maleimide.

7. A composition as defined in Claim 6 wherein component (ii)(a) comprises styrene and component (ii)(b) comprises diethyl fumarate or N-phenyl maleimide.

8. A composition as defined in Claim 1 wherein component (iii) comprises an organic peroxide or an organic azo compound.

9. A composition as defined in Claim 8 wherein said organic peroxide comprises t-butylperoxybenzoate.

10. A composition as defined in Claim 1 wherein component (iv)(a) comprises a reinforcing amount of glass fibers, polyester fibers or a mixture thereof.

11. A composition as defined in Claim 1 wherein component (iv)(b) comprises a flame retardant amount of aluminum trihydrate.

12. A composition as defined in Claim 1 wherein component (iv)(c) comprises an impact improving amount of a styrene-ethylene-butylene-styrene block copolymer or a polymer having a polymerized butyl acrylate core and a styrene shell.

13. A shaped article of manufacture formed by melt processing a composition as defined in Claim 1 by
(1) blending powder or pellets of component (i), with liquid component (ii)(a), liquid component (ii)(b); optionally, component (iii), and at least one of components (iv)(a); (iv)(b) or (iv)(c);
(2) extruding the composition to a desired shape at a temperature below 150° C.; and
(3) curing component (ii)(a) and component (ii)(b).

14. A curable composition comprising
(i) the reaction product of (A) a polyphenylene ether polymer; and (B) a compound having the general formula (I)—Z—(II) which is a compound that contains in its molecule both group (I) which is

at least one group having the formula

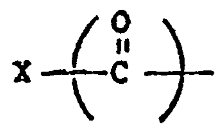

where X is F, Cl, Br, I, OH, OR, or

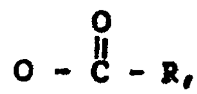

where R is H or an alkyl or aryl radical and group (II) which is at least one carboxylic acid, acid anhydride, acid amide, imido, carboxylic acid ester, amino or hydroxyl group; wherein groups (I) and (II) are covalently bonded through linkage Z which is a divalent hydrocarbon, radical;
(ii)(a) at least one liquid, mono vinyl unsaturated compound having a general formula selected from

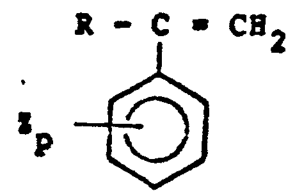

,

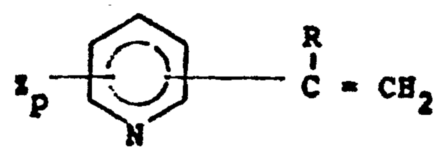

or a mixture of said compounds, wherein R is hydrogen or methyl, Z is hydrogen, halogen, alkyl or alkoxy and p is 0 or a whole number of from 1 to 3, in combination with,
(ii)(b) at least one monovinyl unsaturated compound copolymerizable with and different from component (ii)(a), said vinyl unsaturated compound (ii)(a) and (ii)(b) comprising from 1 to 60 percent by weight of (i) and (ii)(a) and (ii)(b) combined; and, optionally,
(iii) an effective amount of a catalyst capable of generating free radicals to initiate polymerization of the vinyl unsaturated compounds (ii)(a) and (ii)(b).

**15.** A composition as defined in Claim 14 wherein the compounds (ii)(a) and (ii)(b) comprise from 15 to 40 percent by weight of (i) and (ii)(a) and (ii)(b) combined.

**16.** A composition as defined in Claim 14 wherein said polyphenylene ether is a homopolymer or copolymer containing structural units of the formula:

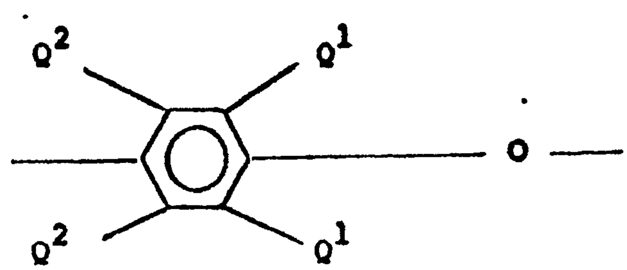

in which for each of these units independently each $Q^1$ is hydrogen, halogen, primary or secondary lower alkyl having up to seven carbon atoms, phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$, said polyphenylene ether having terminal groups selected from reaction products of said polyphenylene ether with an organic acid, an organic acid halide, an organic acid anhydride, a ketene, or a compound having more than one of the functional groups or a mixture of any of the foregoing.

**17.** A composition as defined in Claim 16 wherein said polyphenylene ether is a poly(2,6-dimethyl-1,4-phenylene ether) or a poly(2,6-dimethyl-co-2,3,6-trimethyl-1,4-phenylene ether).

**18.** A composition as defined in Claim 16 wherein said polyphenylene ether is end capped with trimellitic anhydride acid chloride.

**19.** A composition as defined in Claim 14 wherein component (ii)(a) comprises a vinyl aromatic hydrocarbon and component (ii)(b) comprises a dialkyl fumarate or an N-substituted maleimide.

**20.** A composition as defined in Claim 14 wherein component (ii)(a) comprises styrene and component (ii)-(b) comprises diethyl fumarate or N-phenyl maleimide.

**21.** A composition as defined in Claim 14 wherein component (iii) comprises an organic peroxide or an organic azo compound.

**22.** A composition as defined in Claim 21 wherein said organic peroxide comprises t-butyl peroxybenzoate.

**23.** A curable composition as defined in Claim 14 which also includes
(iv)(a) an effective amount of a reinforcing agent;
(iv)(b) an effective amount of a flame retardant agent;
(iv)(c) an effective amount of an impact modifier; or a combination of any of the foregoing.

**24.** A composition as defined in Claim 23 wherein component (iv)(a) comprises a reinforcing amount of glass fibers, polyester fibers or a mixture thereof.

**25.** A composition as defined in Claim 23 wherein component (iv)(b) comprises a flame retardant amount of aluminum trihydrate.

**26.** A composition as defined in Claim 23 wherein component (iv)(c) comprises an impact improving amount of a styrene-ethylene-butylene-styrene block copolymer or a polymer having a polymerized butyl acrylate core and a styrene shell.

**27.** A shaped article of manufacture formed by melt processing a composition as defined in Claim 14 by
(1) blending powder or pellets of components (i), with liquid component (ii)(a), liquid component (ii)-(b) and, optionally, component (iii);
(2) extruding the composition to a desired shape at a temperature below 150 °C.; and
(3) curing component (ii)(a) and component (ii)(b).

**28.** A shaped article of manufacture formed by melt processing a composition as defined in Claim 23 by
(1) blending powder or pellets of component (i), with liquid component (ii)(a), liquid component (ii)-(b); optionally, component (iii), and at least one of components (iv)(a); (iv)(b) or (iv)(c); or a mixture of any of said components (iv)(a), (iv)(b) or (iv)(c);
(2) extruding the composition to a desired shape at a temperature below 150 °C.; and
(3) curing component (ii)(a) and component (ii)(b).

**Revendications**

**1.** Composition durcissable comprenant :

(i) une résine de poly(éther de phénylène) thermoplastique sensiblement dépourvus de substituants qui sont des inhibiteurs des radicaux libres ;

(ii)(a) au moins un composé à insaturation monovinylique liquide ayant une formule générale choisie parmi

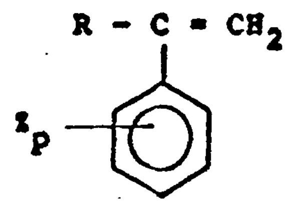

,

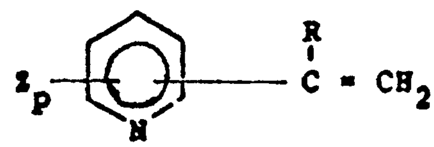

ou un mélange de ces composés, où R est un atome d'hydrogène ou un groupe méthyle, Z est un atome d'hydrogène ou d'halogène ou un groupe alkyle ou alcoxy et p est 0 ou un entier de 1 à 3, en combinaison avec

(ii)(b) au moins un composé à insaturation monovinylique copolymérisable avec le composant (ii)(a) et différent de celui-ci, lesdits composés à insaturation vinylique (ii)(a) et (ii)(b) constituant de 1 à 60 % en poids de (i) et (ii)(a) et (ii)(b) combinés ; et facultativement

(iii) une quantité efficace d'un catalyseur capable de former des radicaux libres pour amorcer la polymérisation des composés à insaturation vinylique (ii)(a) et (ii)(b) ;

et au moins une de :

(iv)(a) une quantité efficace d'un agent de renfort ;

(iv)(b) une quantité efficace d'un agent ignifugeant ; ou

(iv)(c) une quantité efficace d'un modificateur de la résistance au choc.

2. Composition selon la revendication 1, dans laquelle les composés (ii)(a) et (ii)(b) constituent de 15 à 40 % du poids de (i) et (ii)(a) et (ii)(b) combinés.

3. Composition selon la revendication 1, dans laquelle ledit poly(éther de phénylène) est un homopolymère ou copolymère contenant des motifs structuraux de formule :

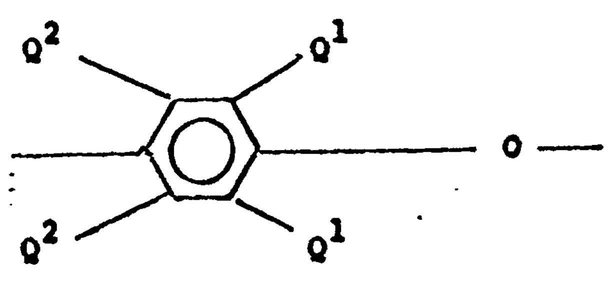

dans laquelle, pour chacun de ces motifs, indépendamment, chaque $Q^1$ est un atome d'hydrogène ou d'halogène ou un radical alkyle inférieur primaire ou secondaire ayant jusqu'à 7 atomes de carbone, un radical phényle, un radical halogénoalkyle ou un radical aminoalkyle, où au moins 2 atomes de carbone séparent l'atome d'halogène ou l'atome d'azote du noyau benzène, un radical hydrocarbonoxy ou un radical halogénohydrocarbonoxy, dans lequel au moins 2 atomes de carbone séparent l'atome d'halogène et l'atome d'oxygène ; et chaque $Q^2$ est indépendamment un atome d'hydrogène ou d'halogène ou un radical alkyle inférieur primaire ou secondaire, un radical phényle, un radical halogénoalkyle, un radical hydrocarbonoxy ou un radical halogénohydrocarbonoxy, comme défini pour $Q^1$, ledit poly(éther de phénylène) ayant des groupes terminaux choisis parmi les produits de la réaction dudit poly(éther

de phénylène) avec un acide organique, un halogénure d'acide organique, un anhydride d'acide organique, un cétène ou un composé ayant plusieurs de ces groupes fonctionnels ou un mélange quelconque de ceux-ci.

4. Composition selon la revendication 3, dans laquelle ledit poly(éther de phénylène) est un poly(éther de 2,6-diméthyl-1,4-phénylène) ou un poly(éther de 2,6-diméthyl-co-2,3,6-triméthyl-1,4-phénylène) coiffé avec un halogénure d'acide, un anhydride d'acide ou un composé ayant des groupes fonctionnels halogénure d'acide et anhydride d'acide.

5. Composition selon la revendication 4, dans laquelle ledit poly(éther de phénylène) est coiffé avec du chlorure de l'anhydride de l'acide trimellitique.

6. Composition selon la revendication 1, dans laquelle le composant (ii)(a) comprend un hydrocarbure vinylaromatique et le composant (ii)(b) comprend un fumarate de dialkyle ou un maléimide N-substitué.

7. Composition selon la revendication 6, dans laquelle le composant (ii)(a) comprend du styrène et le composant (ii)(b) comprend du fumarate de diéthyle ou du N-phénylmaléimide.

8. Composition selon la revendication 1, dans laquelle le composant (iii) comprend un peroxyde organique ou un composé organique azoïque.

9. Composition selon la revendication 8, dans laquelle ledit peroxyde organique comprend du peroxybenzoate de tert-butyle.

10. Composition selon la revendication 1, dans laquelle le composant (iv)(a) comprend une quantité de renfort de fibres de verre, de fibres de polyester ou d'un de leurs mélanges.

11. Composition selon la revendication 1, dans laquelle le composant (iv)(b) comprend une quantité ignifugeante d'alumine hydratée.

12. Composition selon la revendication 1, dans laquelle le composant (iv)(c) comprend une quantité améliorant la résistance au choc d'un copolymère séquencé de styrène-éthylène-butylène-styrène ou d'un polymère ayant un centre d'acrylate de butyle polymérisé et une enveloppe de styrène.

13. Article manufacturé façonné formé par mise en oeuvre à l'état fondu d'une composition selon la revendication 1 par

(1) mélange d'une poudre ou de granules du composant (i) avec le composant liquide (ii)(a), le composant liquide (ii)(b), éventuellement le composant (iii), et au moins un des composants (iv)(a), (iv)(b) ou (iv)(c) ;
(2) extrusion de la composition à la forme désirée à une température inférieure à 150 °C ; et
(3) durcissement du composant (ii)(a) et du composant (ii)(b).

14. Composition durcissable comprenant

(i) le produit de la réaction de (A) un polymère de type poly(éther de phénylène) ; et (B) un composé répondant à la formule générale (I)--Z--(II), qui est un composé qui contient dans sa molécule a la fois un groupe (I) qui est au moins un groupe de formule

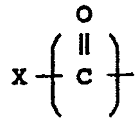

dans laquelle X est F, Cl, Br, I, OH, OR ou

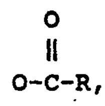

où R est H ou un radical alkyle ou aryle et le groupe (II) qui est au moins un groupe acide carboxylique, anhydride d'acide, amide, imido, ester d'acide carboxylique, amino ou hydroxyle ; où les groupes (I) et (II) sont liés par le radical de liaison Z, qui est un radical hydrocarboné divalent ;
(ii)(a) au moins un composé à insaturation monovinylique liquide dont la formule générale est choisie parmi

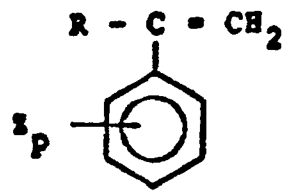

,

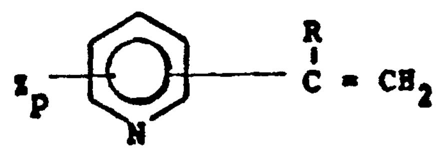

ou un mélange desdits composés, où R est un atome d'hydrogène ou un groupe méthyle, Z est un atome d'hydrogène ou d'halogène ou un groupe alkyle ou alcoxy et p est 0 ou un nombre entier de 1 a 3, en combinaison avec
(ii)(b) au moins un composé à insaturation monovinylique copolymérisable avec le composant (ii)(a) et différent de celui-ci, lesdits composés à insaturation vinylique (ii)(a) et (ii)(b) constituant de 1 à 60 % du poids de (i) et (ii)(a) et (ii)(b) combinés ; et facultativement
(iii) une quantité efficace d'un catalyseur capable de former des radicaux libres pour amorcer la polymérisation des composés à insaturation vinylique (ii)(a) et (ii)(b).

**15.** Composition selon la revendication 14, dans laquelle les composés (ii)(a) et (ii)(b) constituent de 15 à 40 % du poids de (i) et (ii)(a) et (ii)(b) combinés.

**16.** Composition selon la revendication 14, dans laquelle ledit poly(éther de phénylène) est un homopolymère ou copolymère contenant des motifs structuraux de formule :

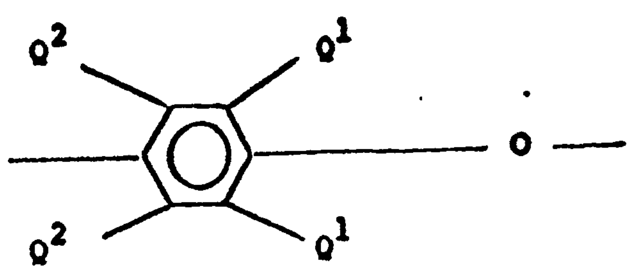

dans laquelle, pour chacun de ces motifs, indépendamment, chaque $Q^1$ est un atome d'hydrogène ou d'halogène ou un radical alkyle inférieur primaire ou secondaire ayant jusqu'à 7 atomes de carbone, un radical phényle, un radical halogénoalkyle ou un radical aminoalkyle, où au moins 2 atomes de carbone séparent l'atome d'halogène ou l'atome d'azote du noyau benzène, un radical hydrocarbonoxy ou un radical halogénohydrocarbonoxy, dans lequel au moins 2 atomes de carbone séparent l'atome d'halogène et l'atome d'oxygène ; et chaque $Q^2$ est indépendamment un atome d'hydrogène ou d'halogène

ou un radical alkyle inférieur primaire ou secondaire, un radical phényle, un radical halogénoalkyle, un radical hydrocarbonoxy ou un radical halogénohydrocarbonoxy, comme défini pour $Q^1$, ledit poly(éther de phénylène) ayant des groupes terminaux choisis parmi les produits de la réaction dudit poly(éther de phénylène) avec un acide organique, un halogénure d'acide organique, un anhydride d'acide organique, un cétène ou un composé ayant plusieurs de ces groupes fonctionnels ou un mélange quelconque de ceux-ci.

**17.** Composition selon la revendication 16, dans laquelle ledit poly(éther de phénylène) est un poly(éther de 2,6-diméthyl-1,4-phénylène) ou un poly(éther de 2,6-diméthyl-co-2,3,6-triméthyl-1,4-phénylène).

**18.** Composition selon la revendication 16, dans laquelle ledit poly(éther de phénylène) est coiffé avec du chlorure de l'anhydride de l'acide trimellitique.

**19.** Composition selon la revendication 14, dans laquelle le composant (ii)(a) comprend un hydrocarbure vinylaromatique et le composant (ii)(b) comprend un fumarate de dialkyle ou un maléimide N-substitué.

**20.** Composition selon la revendication 14, dans laquelle le composant (ii)(a) comprend du styrène et le composant (ii)(b) comprend du fumarate de diéthyle ou du N-phénylmaléimide.

**21.** Composition selon la revendication 14, dans laquelle le composant (iii) comprend un peroxyde organique ou un composé organique azoïque.

**22.** Composition selon la revendication 21, dans laquelle ledit peroxyde organique comprend du peroxybenzoate de tert-butyle.

**23.** Composition durcissable selon la revendication 14 qui comprend également
(iv)(a) une quantité efficace d'un agent de renfort ;
(iv)(b) une quantité efficace d'un agent d'ignifugation ;
(iv)(c) une quantité efficace d'un modificateur du choc ; ou une combinaison quelconque des précédents.

**24.** Composition selon la revendication 23 dans laquelle le composant (iv)(a) comprend une quantité renforçatrice de fibres de verre, de fibres de polyester ou d'un de leurs mélanges.

**25.** Composition selon la revendication 23, dans laquelle le composant (iv)(b) comprend une quantité ignifugeante d'alumine hydratée.

**26.** Composition selon la revendication 23 dans laquelle le composant (iv)(c) comprend une quantité améliorant la résistance au choc d'un copolymère séquencé de styrène-éthylène-butylène-styrène ou d'un polymère ayant un centre d'acrylate de butyle polymérisé et une enveloppe de styrène.

**27.** Article manufacturé façonné formé par mise en oeuvre à l'état fondu d'une composition comme défini dans la revendication 14 par
(1) mélange d'une poudre ou de granules du composant (i) avec le composant liquide (ii)(a), le composant liquide (ii)(b) et éventuellement le composant (iii) ;
(2) extrusion de la composition à la forme désirée à une température inférieure à 150 °C ; et
(3) durcissement du composant (ii)(a) et du composant (ii)(b).

**28.** Article manufacturé façonné formé par mise en oeuvre à l'état fondu d'une composition comme défini dans la revendication 23 par
(1) mélange d'une poudre ou de granules du composant (i) avec le composant liquide (ii)(a), le composant liquide (ii)(b) ; facultativement le composant (iii), et au moins un des composants (iv)(a), (iv)(b) ou (iv)(c) ; ou un mélange quelconque desdits composants (iv)(a), (iv)(b) ou (iv)(c) ;
(2) extrusion de la composition à la forme désirée à une température inférieure à 150 °C ; et
(3) durcissement du composant (ii)(a) et du composant (ii)(b).

**Patentansprüche**

1. Härtbare Zusammensetzung enthaltend:
(i) ein thermoplastisches Polyphenylenätherharz welches im wesentlichen frei von Substituenten ist, die Inhibitoren für freie Radikale sind,
(ii) (a) wenigstens eine flüssige ungesättigte Monovinylverbindung mit einer allgemeinen Formel ausgewählt aus

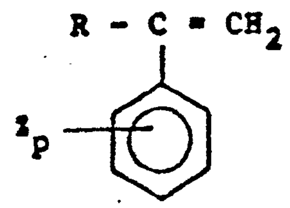

,

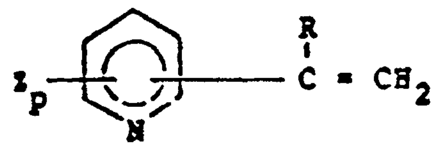

oder eine Mischung dieser Verbindungen worin R Wasserstoff oder Methyl ist, Z Wasserstoff, Halogen, Alkyl oder Alkoxy ist und p 0 oder eine ganze Zahl von 1 bis 3 ist, in Kombination mit
(ii) (b) wenigstens einer ungesättigten Monovinylverbindung die copolymerisierbar mit und unterschiedlich von dem Bestandteil (ii) (a) ist, wobei die ungesättigte Vinylverbindung (ii) (a) und (ii) (b) 1 bis 60 Gew.-% des vereinigten Gewichtes von (i) und (ii) (a) und (ii) (b) ausmachen und fakultativ
(iii) einer wirksamen Menge eines Katalysators, der in der Lage ist freie Radikale zu erzeugen um die Polymerisation der ungesättigten Vinylverbindungen (ii) (a) und (ii) (b) zu initiieren und wenigstens:
(iv) (a) einer wirksamen Menge eines verstärkenden Mittels;
(iv) (b) einer wirksamen Menge eines flammhemmenden Mittels oder
(iv) (c) einer wirksamen Menge eines Schlagmodifizierungsmittels.

2. Zusammensetzung nach Anspruch 1 worin die Verbindungen (ii) (a) und (ii) (b) 15 bis 40 Gew.-% des vereinigten Gewichtes von (i) und (ii) (a) und (ii) (b) umfassen.

3. Zusammensetzung nach Anspruch 1 worin der Polyphenylenäther ein Homopolymer oder Copolymer mit Struktureinheiten der Formel

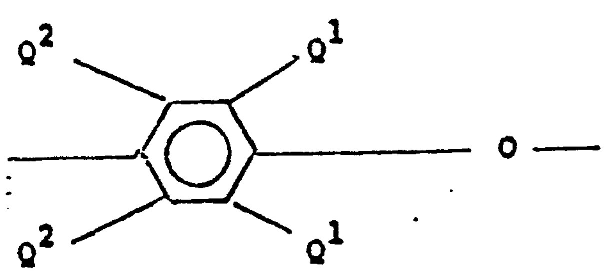

ist, worin für jede dieser Einheiten unabhängig jedes $Q^1$ Wasserstoff, Halogen, primäres oder sekundäres niederes Alkyl mit bis zu sieben Kohlenstoffatomen, Phenyl, Halogenalkyl oder Aminoalkyl, worin wenigstens zwei Kohlenstoffatome das Halogen oder das Stickstoffatom von dem Benzolring trennen, Hydrocarbonoxy oder Halogenhydrocarbonoxy ist, worin wenigstens zwei Kohlenstoffatome die Halogen- und Sauerstoffatome trennen und jedes $Q^2$ unabhängig Wasserstoff, Halogen, primäres oder sekundäres niederes Alkyl, Phenyl, Halogenalkyl, Hydrocarbonoxy oder Halogenhydrocarbonoxy wie es für $Q^1$ definiert ist, wobei der Polyphenylenäther Endgruppen aufweist, die ausgewählt sind aus den Reaktionsprodukten von Polyphenylenäther mit einer organischen Säure, einem organischen Säurehalogenid, einem organischen Säureanhydrid, einem Keten oder einer Verbindung mit mehr als einer der funktionellen Gruppen oder einer Mischung beliebiger vorgenannter Gruppen.

4. Zusammensetzung nach Anspruch 3 worin der Polyphenylenäther ein Poly(2,6-dimethyl-1,4-phenylenäther) oder ein Poly(2,6-dimethyl-co-2,3,6-trimethyl-1,4-phenylenäther) endverschlossen mit einem Säurehalogenid und Säureanhydrid oder einer Verbindung die sowohl Säurehalogenid- und Säureanhydrid-funktionelle Gruppen aufweist, ist.

5. Zusammensetzung nach Anspruch 4 worin der Polyphenylenäther mit Trimellitsäureanhydridsäurechlorid endverschlossen ist.

6. Zusammensetzung nach Anspruch 1 worin der Bestandteil (ii) (a) einen vinylaromatischen Kohlenwasserstoff und der Bestandteil (ii) (b) ein Dialkyl-fumarat oder ein N-substituiertes Maleimid umfaßt.

7. Zusammensetzung nach Anspruch 6 worin der Bestandteil (ii) (a) Styrol und der Bestandteil (ii) (b) Diäthyl-fumarat oder N-phenylmaleimid umfaßt.

8. Zusammensetzung nach Anspruch 1 worin der Bestandteil (iii) ein organisches Peroxid oder eine organische Azoverbindung umfaßt.

9. Zusammensetzung nach Anspruch 8 worin das organische Peroxid t-Butylperoxybenzoat umfaßt.

10. Zusammensetzung nach Anspruch 1 worin der Bestandteil (iv) (a) eine verstärkende Menge Glasfasern Polyesterfasern oder eine Mischung derselben umfaßt.

11. Zusammensetzung nach Anspruch 1 worin der Bestandteil (iv) (b) eine flammhemmende Menge von Aluminiumtrihydrat umfaßt.

12. Zusammensetzung nach Anspruch 1 worin der Bestandteil (iv) (c) eine die Schlagfestigkeit verbessernde Menge eines Styrol-Äthylen-Butylen-Styrolblockcopolymeren oder eines Polymeren mit einem polymerisierten Butylacrylatkern und einem Styrolmantel umfaßt.

13. Ausgeformter Gegenstand der durch Schmelzverarbeitung einer Zusammensetzung nach Anspruch 1 durch
(1) Mischen von Pulver oder Pellets des Bestandteils (i) mit dem flüssigen Bestandteil (ii) (a), dem flüssigen Bestandteil (ii) (b), fakultativ dem Bestandteil (iii) und wenigstens einem der Bestandteile (iv) (a); (iv) (b) oder (iv) (c);
(2) Extrudieren der Zusammensetzung zu einer gewünschten Form bei einer Temperatur unter 150 °C und
(3) Aushärten des Bestandteils (ii) (a) und des Bestandteils (ii) (b) gebildet wird.

14. Aushärtbare Zusammensetzung enthaltend:
(i) das Reaktionsprodukt aus (A) einem Polyphenylenätherpolymeren und (B) einer Verbindung mit der allgemeinen Formel (I) --Z-- (II) welche eine Verbindung ist die in ihrem Molekül sowohl die Gruppe (I), welche wenigstens eine Gruppe mit der Formel

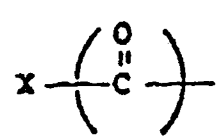

ist, worin X gleich F, Cl, Br, J, OH, OR oder

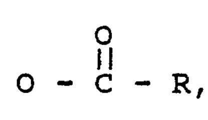

worin R H oder ein Alkyl oder Arylrest ist und die Gruppe (II) welche wenigstens eine Carbonsäure, Säureanhydrid, Säureamid, Imido, Carbonsäureester, Amino- oder Hydroxylgruppe ist, worin die Gruppen (I) und (II) kovalent durch die Bindung Z verbunden sind welche ein zweiwertiger Kohlenwasserstoffrest ist;

(ii) (a) wenigstens eine flüssige ungesättigte Monovinylverbindung mit der allgemeinen Formel ausgewählt aus

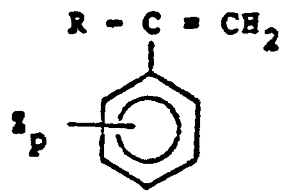

,

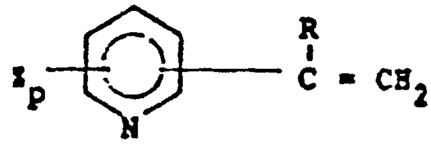

oder einer Mischung der besagten Verbindungen worin R Wasserstoff oder Methyl ist, Z Wasserstoff, Halogen, Alkyl oder Alkoxy ist und p gleich 0 oder eine ganze Zahl von 1 bis 3 ist in Kombination mit

(ii) (b) wenigstens einer ungesättigten Monovinylverbindung die copolymerisierbar ist mit und verschieden ist von dem Bestandteil (ii) (a) wobei diese ungesättigte Vinylverbindung (ii) (a) und (ii) (b) 1 bis 60 Gew.-% der vereinigten Gewichte von (i) und (ii) (a) und (ii) (b) umfaßt und fakultativ

(iii) einer wirksamen Menge eines Katalysators der in der Lage ist freie Radikale zu erzeugen, um die Polymerisation der ungesättigten Vinylverbindungen (ii) (a) und (ii) (b) in Gang zu setzen.

**15.** Zusammensetzung nach Anspruch 14 worin die Verbindugen (ii) (a) und (ii) (b) 15 bis 40 Gew.-% des vereinigten Gewichtes von (i) und (ii) (a) und (ii) (b) umfassen.

**16.** Zusammensetzung nach Anspruch 14 worin der Polyphenylenäther ein Homopolymer oder Copolymer ist welches Struktureinheiten der Formel

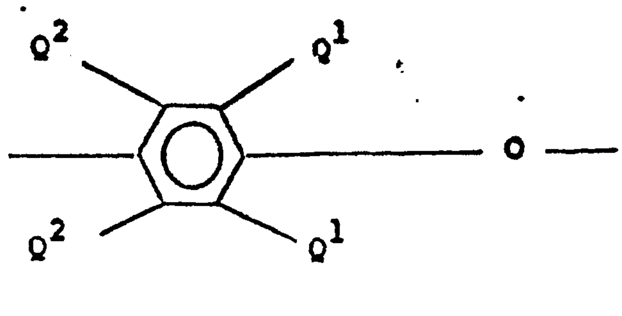

aufweist, worin für jede dieser Einheiten unabhängig jedes $Q^1$ Wasserstoff, Halogen, primäres oder sekundäres niederes Alkyl mit bis zu sieben Kohlenstoffatomen, Phenyl, Halogenalkyl oder Aminoalkyl, worin wenigstens zwei Kohlenstoffatome das Halogen oder das Stickstoffatom von dem Benzolring trennen, Hydrocarbonoxy oder Halogenhydrocarbonoxy, worin wenigstens zwei Kohlenstoffatome die Halogen- und Sauerstoffatome trennen, ist und jedes $Q^2$ unabhängig Wasserstoff, Halogen, primäres oder sekundäres niederes Alkyl, Phenyl, Halogenalkyl, Hydrocarbonoxy oder Halogenhydrocarbonoxy, wie es für $Q^1$ definiert ist, darstellen, wobei der Polyphenylenäther Endgruppen aufweist, ausgewählt aus den Reaktionsprodukten des Polyphenylenäthers mit einer organischen Säure, einem organischen Säurehalogenid, einem organischen Säureanhydrid, einem Keten oder einer Verbindung mit mehr als

einer der funktionellen Gruppen oder einer Mischung aus beliebigen vorgenannten Gruppen.

**17.** Zusammensetzung nach Anspruch 16 worin der Polyphenylenäther ein Poly(2,6-dimethyl-1,4-phenylenäther) oder ein Poly(2,6-dimethyl-co-2,3,6-trimethyl-1,4-phenylenäther) ist.

**18.** Zusammensetzung nach Anspruch 16 worin der Polyphenylenäther mit Trimellitsäureanhydridsäurechlorid endverschlossen ist.

**19.** Zusammensetzung nach Anspruch 14 worin der Bestandteil (ii) (a) einen vinylaromatischen Kohlenwasserstoff und der Bestandteil (ii) (b) ein Dialkylfumarat oder ein N-substituiertes Maleimid ist.

**20.** Zusammensetzung nach Anspruch 14 worin der Bestandteil (ii) (a) Styrol und der Bestandteil (ii) (b) Diäthylfumarat oder N-phenyl-maleimid umfaßt.

**21.** Zusammensetzung nach Anspruch 14 worin der Bestandteil (iii) ein organisches Peroxid oder eine organische Azoverbindung umfaßt.

**22.** Zusammensetzung nach Anspruch 21 worin das organische Peroxid t-Butyl-peroxybenzoat umfaßt.

**23.** Härtbare Zusammensetzung nach Anspruch 14 welche weiterhin umfaßt: (iv) (a) eine wirksame Menge eines Verstärkungsmittels; (iv) (b) eine wirksame Menge eines flammhemmenden Mittels; (iv) (c) eine wirksame Menge eines Schlagmodifizierungsmittels oder eine Kombination aus beliebigen vorgenannten Stoffen.

**24.** Zusammensetzung nach Anspruch 23 worin der Bestandteil (iv) (a) eine verstärkende Menge Glasfasern, Polyesterfasern oder eine Mischung derselben umfaßt.

**25.** Zusammensetzung nach Anspruch 23 worin der Bestandteil (iv) (b) eine flammhemmende Menge von Aluminiumtrihydrat umfaßt.

**26.** Zusammensetzung nach Anspruch 23 worin der Bestandteil (iv) (c) eine die Schlagfestigkeit verbessernde Menge eines Styrol-Äthylen-Butylen-Styrol-Blockcopolymeren oder eines Polymeren mit einem polymerisierten Butylacrylatkern und einem Styrolmantel umfaßt.

**27.** Ausgeformter Gegenstand der durch Schmelzverarbeitung einer Zusammensetzung nach Anspruch 14 durch

(1) Mischen von Pulver oder Pellets der Bestandteile (i) mit dem flüssigen Bestandteil (ii) (a), dem flüssigen Bestandteil (ii) (b) und fakultativ dem Bestandteil (iii);
(2) Extrudieren der Zusammensetzung zur gewünschten Form bei einer Temperatur unter 150°C und
(3) Aushärten des Bestandteils (ii) (a) und des Bestandteils (ii) (b) gebildet wird.

**28.** Ausgeformter Gegenstand der durch Schmelzverarbeitung einer Zusammensetzung nach Anspruch 23 durch

(1) Mischen des Pulvers oder der Pellets des Bestandteils (i) mit dem flüssigen Bestandteil (ii) (a), dem flüssigen Bestandteil (ii) (b), fakultativ dem Bestandteil (iii) und wenigstens einem der Bestandteile (iv) (a) (iv) (b) oder (iv) (c) oder einer Mischung aus beliebigen der vorgenannten Bestandteile (iv) (a) (iv) (b) oder (iv) (c),
(2) Extrudieren der Zusammensetzung zu einer gewünschten Form bei einer Temperatur unter 150°C und
(3) Aushärten des Bestandteils (ii) (a) und des Bestandteils (ii) (b) gebildet wird.